# EUROPEAN PATENT APPLICATION

(11) **EP 3 018 899 A1**
(43) Date of publication of application: **11.05.2016**
(21) Application number: 13880971.0
(22) Date of filing: 25.11.2013
(51) Int. Cl.: H04N 7/15

(54) **VIDEO COMMUNICATION METHOD AND DEVICE**

(30) Priority: 05.07.2013 CN 201310281934
(71) Applicant: ZTE Corporation, Shenzhen, Guangdong 518057 (CN)
(72) Inventor: DING, Peng, Shenzhen Guangdong 518057 (CN); MING, Xixi, Shenzhen Guangdong 518057 (CN); WU, Mingliang, Shenzhen Guangdong 518057 (CN); ZHAO, Lei, Shenzhen Guangdong 518057 (CN)
(74) Representative: Novagraaf Technologies
(86) International application number: PCT/CN2013/087797
(87) International publication number: WO 2014/161326

(57) **Abstract**

Provided are a video communication method and device. The method includes: a cloud platform stored conference related information of a video conference terminal is received from the cloud platform; and according to the conference related information, a video conference is initiated. The disclosure improves the efficiency of holding the video conference.

## Description

### Technical Field

The disclosure relates to the field of video communication, and in particular to a video communication method and device.

### Background

The so-called video conference is enabling attendees in different places to participate in discussions on the same issue through terminals and networks; the attendees can not only hear the sound of a speaker, but also can see the image and background of the speaker; meanwhile, the attendees can also exchange data, text, charts and other information about the issue, so the attendees can obtain more abundant various information than that of a teleconference.

The so-called TV conference system is also called video conference system; it is system equipment with which individuals or groups in two or more than two places transfer sound, images or files to each other through transmission lines or multimedia devices to implement an instant and interactive communication, so as to achieve the aim of a conference.

The generation of the video conference system brings an immeasurable influence on human society. In April, 1984, the video conference system was used for holding an international conference the first time in the world; it enabled delegates of various countries attending the conference to meet on a screen without leaving their countries; the video conference system is not only used for conferences, but also for transactions facing the screen in business, for distance learning activity in the educational field, for telemedicine in the medical treatment field, and so on. The widespread use of the video conference can save time and travel expense of people greatly, and can also benefit energy conservation and pollution abatement greatly.

In recent years, more and more enterprises strengthen input on video communication, the market of video conference also shows a comparatively fast growth momentum, and the video communication may become a main force in the future unified communications. With the explosive growth of mobile smart terminal products, the development of the mobile terminal which may access multiple networks is both a challenge and an opportunity for video conference manufactures, and how to enable different terminals to participate in a smooth video conference is the critical problem that the video conference manufactures face; the video conference system will also develop towards mobility, multiple terminals and multiple states, and lead the human into the dream of infinite communication.

In the existing video conference system, holding a video conference needs a lot of communication to determine related information, which is bound to increase the extra workloads and the length of time of the conference, and is inefficient.

### Summary

The disclosure provides a video communication method and device, so as to improve the efficiency of holding a video conference.

To solve the above technical problems, the technical solutions of the disclosure are implemented as follows.

A video communication method is provided, which is applied to a video conference initiator, and includes that: cloud platform stored conference related information of a video conference terminal from the cloud platform is received from the cloud platform; and a video conference is initiated according to the conference related information.

Preferably, said initiating the video conference according to the conference related information specifically includes that: according to the conference related information, a current available video conference terminals needing to participate in the video conference and address information about the current available video conference terminals needing to participate in the video conference are determined; according to the address information, the video conference is initiated with the current available video conference terminals needing to participate in the conference.

Preferably, after initiating the video conference, the method further includes that: the conference related information about the video conference is sent to the cloud platform, so that the cloud platform can send the conference related information to a first terminal to enable the first terminal to access the video conference according to the conference related information.

Preferably, the conference related information is synchronously updated to the cloud platform by the video conference terminal.

A video communication method is also provided, which is applied to a cloud platform, and includes that:
A cloud platform stored conference related information of a video conference terminal is sent to the video conference initiator, so that the video conference initiator can initiate a video conference according to the conference related information.

Preferably, the method further includes that: the conference related information of the video conference which is sent by the video conference initiator after initiating the video conference is received; and the conference related information is sent to the first terminal, so that the first terminal can access the video conference according to the conference related information.

Preferably, the conference related information is synchronously updated to the cloud platform by the video conference terminal.

A video communication method is also provided, which is applied to a video conference terminal, and includes that: a cloud platform stored conference related information of a video conference terminal is received from the cloud platform; and the current video conference is accessed according to the conference related information.

Preferably, the conference related information is received from a conference initiator of the current video conference and stored by the cloud platform after the current video conference is initiated.

Preferably, when the access is completed, the method further includes that: connection state information about the video conference terminal is updated to being in a conference; the updated connection state information is sent to the cloud platform, so that the cloud platform can send the updated connection state information to an initiator of the first video conference; wherein the updated connection state information is used for the initiator of the first video conference to judge whether the video conference terminal is a video conference terminal available to participate in the first video conference currently.

A video communication device is also provided, which is applied to the video conference initiator, and includes: a first receiving component configured to receive a cloud platform stored conference related information of the video conference terminal; an initiating component configured to initiate a video conference according to the conference related information.

Preferably, the initiating component specifically includes: a determining element configured to determine the current available video conference terminals needing to participate in the video conference, and the address information about the current available video conference terminals needing to participate in the video conference; and an initiating element configured to initiate the video conference with the current available terminals needing to participate in the video conference according to the address information.

A video communication device is also provided, which is applied to a cloud platform, and includes: a first sending component configured to send a cloud platform stored conference related information of a video conference terminal to a video conference initiator to enable the video conference initiator to initiate a video conference according to the conference related information.

Preferably, the device further includes: a second receiving component configured to receive the conference related information about the video conference which is sent by the video conference initiator after initiating the video conference; and a second sending component configured to send the conference related information to the first terminal, so that the first terminal can access the video conference according to the conference related information.

A video communication device is also provided, which is applied to the video conference terminal, and includes: a third receiving component configured to receive a cloud platform stored conference related information of a current video conference from the cloud platform; and an accessing component configured to access the current video conference according to the conference related information.

It can be seen from above that the disclosure at least has the following beneficial effects: by receiving the conference related information of the video conference terminal from the cloud platform, and initiating a video conference according to the conference related information, the flow of initiating a video conference is simplified, and the efficiency of holding a video conference is improved; by sending the conference related information of the video conference terminal to the video conference initiator to enable the video conference initiator to initiate a video conference according to the conference related information, the flow of initiating the video conference is simplified, and the efficiency of holding a video conference is improved; by receiving the conference related information about the current video conference from the cloud platform, and accessing the current video conference according to the conference related information, the flow of accessing the current video conference by a new video conference terminal is simplified, and the efficiency of holding a video conference is improved.

### Brief Description of the Drawings

Fig. 1 is a flowchart of a video communication method according to a first embodiment of the disclosure;
Fig. 2 is a flowchart of a video communication method according to a second embodiment of the disclosure;
Fig. 3 is a flowchart of a video communication method according to a third embodiment of the disclosure;
Fig. 4 is a diagram showing that a conference initiator initiates a fast call after acquiring information about a terminal participating a conference by interacting with a conference cloud platform according to a preferred embodiments of the disclosure; and
Fig. 5 is a diagram showing that a new video conference terminal accesses a conference after interacting with a conference cloud platform according to a preferred embodiment of the disclosure.

### Detailed Description of the Embodiments

For making the technical solutions and the advantages of the disclosure more clear, the disclosure is elaborated below in combination with the embodiments and the accompanying drawings.

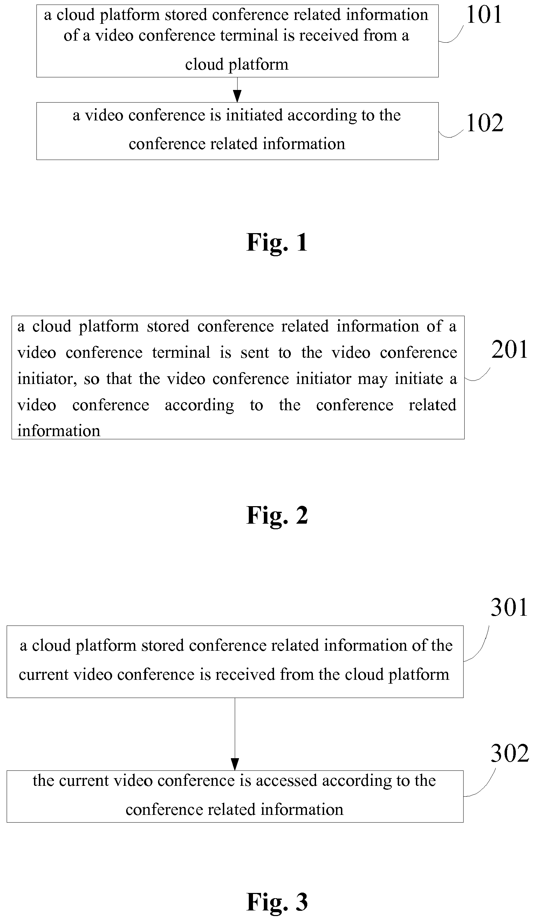

Fig. 1 is a flowchart of a video communication method according to a first embodiment of the disclosure; with reference to Fig. 1, the first embodiment of the disclosure provides a video communication method, which includes the following blocks.

In block 101: a cloud platform stored conference related information of a video conference terminal is received from a cloud platform; and

In block 102: a video conference is initiated according to the conference related information.

The above method is applied to the video conference initiator.

By receiving the conference related information of the video conference terminal from the cloud platform, and initiating a video conference according to the conference related information, the flow of initiating a video conference is simplified, and the efficiency of holding a video conference is improved.

In one embodiment, the video conference terminal may be any type of terminal with capability of participating in the video conference, such as a dedicated terminal device, a Multipoint Control Element (MCU), a videophone or a soft terminal.

The video conference initiator may be any type of terminal with capability of participating in the video conference, such as the dedicated terminal device, the MCU, the videophone or the soft terminal; or, the video conference initiator may also be the MCU without capability of participating in the video conference. There can be one or more than one video conference terminal. After being powered on, the video conference initiator may receive the conference related information which is sent by the cloud platform actively because of knowing that the video conference initiator is powered on.

Or, when a preset user keystroke operation is monitored, the video conference initiator may send trigger indication information to the cloud platform to trigger the cloud platform to send the conference related information to the video conference initiator.

Or, the conference related information may also be information responded by the cloud platform at a request of the video conference initiator; the video conference initiator may first determine an identity of a video conference terminal, and sends a request message including the identity of the video conference terminal to the cloud platform; then, the cloud platform parses the received request message to obtain the identity of the video conference terminal, and acquires the conference related information from the information stored by the cloud platform according to the identity of the video conference terminal.

The interaction between the cloud platform and the video conference initiator may be performed through the Session Initiation Protocol (SIP), the H.323 or other interaction modes based on the TCP/UDP.

In the embodiments of the disclosure, according to the conference related information, initiating the video conference may include that:
according to the conference related information, the current available video conference terminals needing to participate in the video conference, and the address information about the current available video conference terminals needing to participate in the video conference are determined; and
according to the address information, the video conference is initiated with the current available video conference terminals needing to participate in the video conference.

Therefore, communication needed for determining the address and state information of the current available video conference terminals needing to participate in the video conference is reduced.

In one embodiment, address book information of the video conference terminal may be updated according to the address information, and the video conference may be initiated by way of one-touch calling. Of course, other implementation that those skilled in the art may think of can also be available, which are not repeated here.

In the embodiments of the disclosure, in order to support a new video conference terminal to access the video conference, the method may also include the following blocks after the video conference is initiated.

The conference related information about the video conference is sent to the cloud platform, so that the cloud platform can send the conference related information to a first terminal to enable the first terminal to access the video conference according to the conference related information.

In one embodiment of the disclosure, the conference related information may be stored in the cloud platform by way of inputting manually, or may also be synchronously updated to the cloud platform by the video conference terminal. The synchronously updating may be performed on the background For example, if a certain one of the video conference terminals accesses another video conference, then the video conference terminal updates its own connection state to being in a conference, and synchronously sends the updated connection state to the cloud platform.

Fig. 2 is a flowchart of a video communication method according to a second embodiment of the disclosure; with reference to Fig. 2, the second embodiment of the disclosure provides a video communication method, which includes the following blocks.

In block 201: a cloud platform stored conference related information of a video conference terminal is sent to the video conference initiator, so that the video conference initiator may initiate a video conference according to the conference related information.

The above method is applied to the cloud platform.

By sending the conference related information about the video conference terminal to the video conference initiator to enable the video conference initiator to initiate the video conference according to the conference related information, the flow of initiating the video conference is simplified, and the efficiency of holding the video conference is improved.

In one embodiment of the disclosure, for supporting a new video conference terminal to access the video conference, the method may also include that:
the conference related information about the video conference which is sent by the video conference initiator after the video conference initiator initiates the video conference is received; and
the conference related information is sent to the first terminal, so that the first terminal may access the video conference according to the conference related information.

In one embodiment of the disclosure, the conference related information may be input manually into the cloud platform to be stored, or may also be synchronously updated to the cloud platform by the video conference terminal. The synchronously updating may be performed in the background. For example, if a certain one of the video conference terminals accesses another video conference, then the video conference terminal updates its own connection state to being in a conference, and synchronously sends the updated connection state to the cloud platform.

Fig. 3 is a flowchart of a video communication method according to a third embodiment of the disclosure; with reference to Fig. 3, the third embodiment of the disclosure provides a video communication method, which includes the following blocks.

In block 301: a cloud platform stored conference related information of the current video conference is received from the cloud platform.

In block 302: the current video conference is accessed according to the conference related information.

The above method is applied to the video conference terminal.

By receiving the conference related information about the current video conference from the cloud platform, and accessing the current video conference according to the conference related information, the flow of accessing the current video conference by a new video conference terminal is simplified, and the efficiency of holding the video conference is improved.

In one embodiment, the video conference terminal may be any type of terminal with capability of participating in the video conference, such as the dedicated terminal device, the MCU, the videophone or the soft terminal.

In one embodiment of the disclosure, the conference related information may be input manually into the cloud platform to be stored, or may also be received from the conference initiator of the current video conference and stored by the cloud platform after the current video conference is initiated.

The address information (e.g. an IP address) of the video conference terminal may be preset in the cloud platform, and the conference related information stored is actively sent to the video conference terminal according to the address information; or, the cloud platform may also send the conference related information to the video conference terminal after receiving a request from the video conference terminal.

In one embodiment of the disclosure, considering that the connection state of the new video conference terminal may have changed when accessing the current video conference, for enabling the initiator of other video conferences to obtain the latest connection state of the new video conference terminal efficiently to judge whether the new video conference terminal is a current available video conference terminal, when the access is completed the method may also include that:
the connection state information about the video conference terminal is updated to being in a conference; and
the updated connection state information is sent to the cloud platform to enable the cloud platform to send the updated connection state information to the initiator of the first video conference;
wherein the updated connection state information is used for the initiator of the first video conference to judge whether the video conference terminal is a video conference terminal which is available to participate the first video conference currently.

For making the description of the disclosure more clear, the preferred implementations of the disclosure are provided below.

The first embodiment, the second embodiment and the third embodiment of the disclosure are respectively described based on the video conference initiator, the cloud platform and the new video conference terminal. By taking that the video conference initiated in the first embodiment of the disclosure, the video conference initiated in the second embodiment of the disclosure and the video conference accessed in the third embodiment of the disclosure are the same video conference for example, the first embodiment, the second embodiment and the third embodiment of the disclosure are described by providing a method for fast call and synchronous update of data in a video conference system.

The method for fast call and synchronous update of data in the video conference system includes that:
a conference initiator acquires the latest address and state information about the video conference terminal, which is available to participate in a video conference, from the conference cloud platform, and initiates the video conference of unilateral or multilateral communication quickly by way of one-button operation; the new video conference terminal acquires the conference related information of the current video conference by interacting with the conference cloud platform, and accesses the video conference in the best way selected by comparing; in the process of accessing the video conference, the video conference terminal participating the video conference interacts with the conference cloud platform to implement the synchronous update of data by the background processing way.

The conference initiator described here includes any terminal device that can initiate a conference call; the video conference terminal participating the conference and the new video conference terminal described here also include any terminal device that is available to participate in a conference, such as a general video conference terminal, a teleconference terminal, a mobile smart terminal, and a PC running video communication software.

The latest address and state information of the video conference terminal needing to participate a video conference is acquired; information elements which are interacted with the conference cloud platform described here are not limited to the address and state information of the video conference terminal, but include all other attribute information in the terminal device, such as a terminal type, a terminal name, and a terminal performance parameter; these are changed according to the needs of an actual conference scenario.

The way of initiating the video conference here includes a networking way of a point-to-point conference and a multipoint conference. The video conference of unilateral communication is the point-to-point conference, and the video conference of multilateral communication is the multipoint conference.

The conference related information about the current video conference described here is not limited to a conference type, a control mode, a chairman's address, and other information, but includes all other information describing conference attributes; these are changed according to the needs of an actual conference scenario.

In the process of accessing the video conference, the video conference terminal participating in the video conference interacts with the conference cloud platform to implement the synchronous update of data by the background processing way; the synchronous update of data described here includes the synchronous update of data between the video conference terminal participating in the video conference and the conference cloud platform.

The process that the conference initiator acquires the latest address and state information of the video conference terminal needing to participate in the video conference from the conference cloud platform includes that:
the conference initiator first interacts with the conference cloud platform to inquire the latest address and state information of the video conference terminal needing to participate in the video conference; for example, when the video conference terminal needing to participate in the video conference is in other conference, its state is displayed as being in a conference; the conference initiator judges the current working state of the video conference terminal, and synchronously updates the address book information of the video conference terminal which is available to attend the video conference normally.

The process of initiating the video conference of unilateral or multilateral communication quickly by way of one-button operation may include that:
after updating the address book information, the conference initiator checks the actual situation of the current terminal participating in the video conference currently, and decides whether to hold an appointed conference; if the conference is conducted normally, a call is directly made by operating a call shortcut key, so that the video conference of unilateral or multilateral communication is initiated quickly.

A video conference of unilateral or multilateral communication is initiated quickly by way of one-button operation; the way of one-button operation described here includes any way of controlling the video conference terminal, such as using the call shortcut key of a remote controller, a Web page, and a PC console.

The process that the new video conference terminal acquires the current conference information by interacting with the conference cloud platform, and accesses the conference in the best way selected by comparing may include that:
in a normal conference, when there is a new video conference terminal needing to participate in the conference, information related to the current conference, such as the conference type, the control way, and the chairman's address, is acquired by interacting with the conference cloud platform; the new video conference terminal performs access authentication with a conference control element with reference to the networking way of the current conference, then accesses the conference normally via capability exchange, master-slave determination, channel establishment and other processes, and completes the synchronous update of the connection state.

The process that the video conference terminal participating in the conference interacts, in the process of accessing the conference, with the conference cloud platform to implement the synchronous update of data by the background processing way may include:
The process that all the video conference terminals participating in the conference perform, in the process of accessing the conference, data interaction with the conference cloud platform by the background processing way includes two aspects: on one hand, when the address and state information of the video conference terminal changes because of internal and external causes, data information of the video conference terminal which is recorded by the conference cloud is updated by interacting with the conference cloud platform; on the other hand, the recorded data information of other terminals is compared and updated by the video conference terminal by interacting with the conference cloud platform, namely updating the address book information to implement the synchronous update of data of the video conference terminal.

In the existing video conference system, before a conference is held and when a new video conference terminal is added in the conference, a lot of communication is needed for determining the address and state information of the video conference terminal needing participate in the video conference, which is bound to increase the extra workloads and the length of time of the conference; for ensuring that the conference is held successfully and improving the timeliness of conference, the preferred embodiment provides a method for fast call and synchronous update of data in the video conference system, so as to implement the fast call of the video conference and the synchronous update of data of the video conference terminal participating in the conference

In the preferred embodiment, the conference cloud platform is used so as to implement the synchronous update of data of the video conference terminal participating in the conference by the background processing way, thus the problem that the conference cannot be held as expected when the address and state information of the video conference terminal changes in network environments can be solved, and the timely data update can also ensure the fast call of the video conference, which improves the service experience of users greatly.

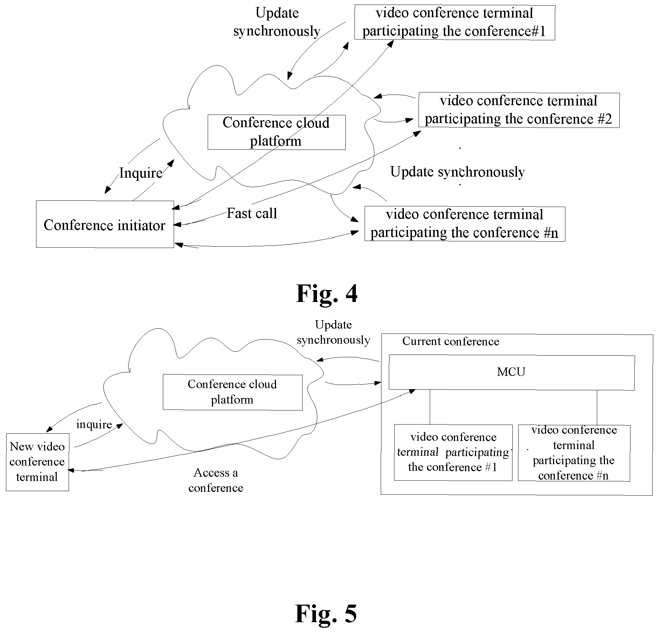

The technical solutions provided by the preferred embodiments are further described clearly and integrally in combination with Fig. 4 and Fig. 5.

Fig. 4 is a diagram showing that a conference initiator initiates a fast call after acquiring information about a video conference terminal needing to participate in a video conference by interacting with the conference cloud platform according to a preferred embodiment of the disclosure; with reference to Fig. 4, the flow of initiating a fast call includes the following blocks.

In block 401: the conference initiator acquires the latest address and state information of the video conference terminal participating in the conference from the conference cloud platform.

In block 402: in actual operation, if the current address and state information of the video conference terminal participating the conference changes because of the internal and external causes, the data information of the video conference terminal which is recorded by the conference cloud platform is updated by interacting with the conference cloud platform by the background processing way.

In block 403: the conference initiator judges the current work state of the video conference terminal and synchronously updates the address book information of the video conference terminal available to attend the conference normally; and

In block 404: the conference initiator checks the actual situation of the current video conference terminal which is available to participate in the video conference, and decides whether to hold the appointed conference; if the conference is conducted normally, a call is directly made by operating the call shortcut key, so that a video conference of unilateral or multilateral communication is initiated quickly.

Fig. 5 is a diagram showing that a new video conference terminal accesses a conference after interacting with the conference cloud platform according to an embodiment of the disclosure; with reference to Fig 5, the flow of accessing the video conference includes the following blocks.

In block 501: the current conference which is held normally is appointed; after the conference is held, the state information of each video conference terminal in the conference network is updated by interacting, in the background, with the conference cloud platform;

In block 502: the new video conference terminal acquires the conference related information about the current conference, such as the conference type, the control way, and the chairman's address, by interacting with the conference cloud platform; and

In block 503: the new video conference terminal initiates an access authentication to a conference control element with reference to the networking way of the current conference, and after being allowed to access the video conference, accesses the conference normally via capability exchange, master-slave determination, channel establishment and other processes, and completes the synchronous update of the connection state.

The disclosure also provides a video communication device, which includes:
the first receiving component configured to receive a cloud platform stored conference related information of a video conference terminal from the cloud platform ; and
the initiating component configured to initiate a video conference according to the conference related information.

The above device is applied to the video conference initiator.

Therefore, by receiving the conference related information about the video conference terminal from the cloud platform, and initiating a video conference according to the conference related information, the flow of initiating the video conference is simplified, and the efficiency of holding the video conference is improved.

In one embodiment, the initiating component may include:
the determining element configured to determine current available video conference terminals needing to participate in a video conference, and the address information about the current available video conference terminals needing to participate in a video conference; and
the initiating element configured to initiate the video conference with the current available video conference terminals needing to participate in the video conference according to the address information.

The disclosure also provides a video communication device, which includes:
a first sending component configured to send a cloud platform stored conference related information of a video conference terminal to a video conference initiator to enable the video conference initiator to initiate a video conference according to the conference related information.

The above device is applied to the cloud platform.

Thus, by sending the conference related information about the video conference terminal to the video conference initiator to enable the video conference initiator to initiate a video conference according to the conference related information, the flow of initiating the video conference is simplified, and the efficiency of holding the video conference is improved.

In one embodiment, the above device may further include:
the second receiving component configured to receive the conference related information about the video conference which is sent by the video conference initiator after initiating the video conference; and
the second sending component configured to send the conference related information to the first terminal to enable the first terminal to access the video conference according to the conference related information.

The disclosure also provides a video communication device, which includes:
a third receiving component configured to receive a cloud platform stored conference related information of a current video conference from the cloud platform; and
an accessing component configured to access the current video conference according to the conference related information.

The above device is applied to the video conference terminal.

Thus, by receiving the conference related information about the current video conference from the cloud platform, and accessing the current video conference according to the conference related information, the flow of accessing the current video conference by a new video conference terminal is simplified, and the efficiency of holding a video conference is improved.

The above embodiments are only the implementations of the disclosure; it should be indicated that, on the premise of not departing from the principles of the disclosure, the common skilled in the technical field can also make a number of improvements and supplements, and these improvements and supplements shall fall within the scope of the claims of the disclosure.

### Industrial Applicability

As above, a video communication method and device provided by the disclosure have the following beneficial effects: by receiving the conference related information about the video conference terminal from the cloud platform, and initiating a video conference according to conference related information, the flow of initiating the video conference is simplified, and the efficiency of holding the video conference is improved; by sending the conference related information about the video conference terminal to the video conference initiator to enable the video conference initiator to initiate a video conference according to the conference related information, the flow of initiating the video conference is simplified, and the efficiency of holding the video conference is improved; by receiving the conference related information about the current video conference from the cloud platform, and accessing the current video conference according to the conference related information, the flow of accessing the current video conference by a new video conference terminal is simplified, and the efficiency of holding a video conference is improved.

## Claims

1. A video communication method, which is applied to a video conference initiator, **characterized by** comprising:
receiving a cloud platform stored conference related information of a video conference terminal from the cloud platform; and
initiating a video conference according to the conference related information.

2. The method according to claim 1, **characterized in that** said initiating the video conference according to the conference related information comprises:
according to the conference related information, determining current available video conference terminals needing to participate in the video conference, and address information about the current available video conference terminals needing to participate in the video conference;
according to the address information, initiating the video conference with the current available video conference terminals needing to participate in the video conference.

3. The method according to claim 1, **characterized in that** after initiating the video conference, the method further comprises:
sending the conference related information about the video conference to the cloud platform to enable the cloud platform to send the conference related information to a first terminal, so as to enable the first terminal to access the video conference according to the conference related information.

4. The method according to claim 1, **characterized in that** the conference related information is synchronously updated to the cloud platform by the video conference terminal.

5. A video communication method, which is applied to a cloud platform, **characterized by** comprising:
sending a cloud platform stored conference related information of a video conference terminal to a video conference initiator to enable the video conference initiator to initiate a video conference according to the conference related information.

6. The method according to claim 5, **characterized by** further comprising:
receiving the conference related information, which is sent by the video conference initiator after initiating the video conference, about the video conference; and
sending the conference related information to the first terminal to enable the first terminal to access the video conference according to the conference related information.

7. The method according to claim 5, **characterized in that** the conference related information is synchronously updated to the cloud platform by the video conference terminal.

8. A video communication method, which is applied to a video conference terminal, **characterized by** comprising:
receiving from a cloud platform stored conference related information of a current video conference; and
according to the conference related information, accessing the current video conference.

9. The method according to claim 8, **characterized in that** after the current video conference is initiated, the conference related information is received from a conference initiator of the current video conference and is stored by the cloud platform.

10. The method according to claim 8, **characterized in that** when the access is completed, the method further comprises:
updating connection state information about the video conference terminal to being in a conference;
sending the updated connection state information to the cloud platform to enable the cloud platform to send the updated connection state information to an initiator of a first video conference;
wherein the updated connection state information is used for the initiator of the first video conference to judge whether the video conference terminal is a video conference terminal available to participate in the first video conference currently.

11. A video communication device, which is applied to a video conference initiator, **characterized by** comprising:
a first receiving component configured to receive a cloud platform stored conference related information of a video conference terminal; and
an initiating component configured to initiate a video conference according to the conference related information.

12. The device according to claim 11, **characterized in that** the initiating component comprises:
a determining element configured to determine current available video conference terminals needing to participate in a video conference, and address information about the current available video conference terminals needing to participate in the video conference; and
an initiating element configured to initiate the video conference with the current available terminals needing to participate in the video conference.

13. A video communication device, which is applied to a cloud platform, **characterized by** comprising:
a first sending component configured to send a cloud platform stored conference related information of a video conference terminal to a video conference initiator to enable the video conference initiator to initiate a video conference according to the conference related information.

14. The device according to claim 13, **characterized by** further comprising:
a second receiving component configured to receive the conference related information, which is sent by the video conference initiator after initiating the video conference, about the video conference; and
a second sending component configured to send the conference related information to a first terminal to enable the first terminal to access the video conference according to the conference related information.

15. A video communication device, which is applied to a video conference terminal, **characterized by** comprising:
a third receiving component configured to receive a cloud platform stored conference related information of a current video conference from the cloud platform; and
an accessing component configured to access the current video conference according to the conference related information.
